# EUROPEAN PATENT APPLICATION

(11) **EP 4 659 978 A1**
(43) Date of publication of application: **10.12.2025**
(21) Application number: 24211987.3
(22) Date of filing: 11.11.2024
(51) Int. Cl.: B60K 6/387, B60K 6/442, B60W 10/02, B60W 10/06, B60W 10/08, B60W 20/11, B60W 20/15, B60W 20/40, B60W 30/184, B60W 30/186, B60W 30/188, B60W 40/12, B60K 6/48, B60W 50/00

(54) **HYBRID VEHICLE**

(30) Priority: 07.06.2024 KR 20240074518
(71) Applicant: Hyundai Motor Company, Seoul 06797 (KR); Kia Corporation, Seocho-gu Seoul 06797 (KR)
(72) Inventor: CHO, Jin Kyeom, 18280 Hwaseong-si, Gyeonggi-do (KR); CHOI, Hyeon Taek, 18280 Hwaseong-si, Gyeonggi-do (KR); LEE, Ye Eun, 18280 Hwaseong-si, Gyeonggi-do (KR); JEON, Seok Cheon, 18280 Hwaseong-si, Gyeonggi-do (KR); MYOUNG, Han Seung, 18280 Hwaseong-si, Gyeonggi-do (KR); WOO, Dong Hyeon, 18280 Hwaseong-si, Gyeonggi-do (KR)
(74) Representative: Isarpatent

(57) **Abstract**

The hybrid vehicle includes a drive system including an internal combustion drive system and an electric drive system, a clutch that selectively connects the internal combustion drive system and the electric drive system, and a controller that performs at least one of driving mode control, operating point control, or clutch control, when entering residual value preservation control for balancing respective residual values of the internal combustion drive system, the electric drive system, and the clutch.

## Description

### BACKGROUND

### 1. Technical Field

The present disclosure relates to a hybrid vehicle that performs control for preserving a vehicle's residual value.

### 2. Description of the Related Art

Recently, according to high interest in the environment, the number of eco-friendly vehicles equipped with an electric motor as a power source is increasing. Such an eco-friendly vehicle is also called an electrified vehicle, which includes a hybrid vehicle (HEV) or an electric vehicle (EV) as a representative example.

Since the hybrid vehicle among the electrified vehicles is additionally equipped with a motor, unlike general internal combustion engine vehicles, the hybrid vehicle may obtain power necessary for driving through the motor as well as an internal combustion engine. Accordingly, during driving using two drive sources of the engine and the motor, the hybrid vehicle may provide optimal output and torque depending on harmonious operation of the engine and the motor.

Meanwhile, as such hybrid vehicles flow into a used car market on a large scale, the need to consider preservation of a vehicle's residual value is increasing.

The residual value of the hybrid vehicle may vary depending on a residual value of each major component (for example, the engine, the motor, or the like) of the vehicle, and particularly, may be greatly affected by a component having the lowest residual value among the major components. For example, in a case where a residual value of a specific major component of the vehicle is excessively low compared with the remaining major components, the entire residual value of the hybrid vehicle may be assessed on the basis of the low residual value of the specific major component, regardless of the residual values of other major components.

The above information disclosed in the background technology is only for understanding of the background of the disclosure, and therefore, does not disclose the prior art that is already known to those skilled in the art.

### SUMMARY

The present disclosure has been made in view of the above problems, and it is an object of the present disclosure to provide a hybrid vehicle capable of performing residual value preservation control for balancing residual values of an internal combustion drive system, an electric drive system, and a clutch, which are main components of the vehicle.

The technical problems to be achieved in the present disclosure are not limited to the above-mentioned technical problems, and other technical problems not mentioned will be clearly understood by those skilled in the art from the following description.

In accordance with the present disclosure, the above object can be accomplished by the provision of a hybrid vehicle including a drive system that includes an internal combustion drive system and an electric drive system, a clutch that selectively connects the internal combustion drive system and the electric drive system, and a controller that performs at least one of driving mode control, operating point control, or clutch control, when entering residual value preservation control for balancing respective residual values of the internal combustion drive system, the electric drive system, and the clutch.

In a case where a difference between the residual values of the internal combustion drive system and the electric drive system is outside a preset range, the controller may enter the residual value preservation control.

The controller may perform the driving mode control in the residual value preservation control.

The controller may perform the driving mode control by adjusting a power output condition of at least one of the internal combustion drive system or the electric drive system.

The controller may perform the driving mode control by adjusting upward the power output condition of the internal combustion drive system or the electric drive system, , whichever has a lower residual value.

The controller may perform the driving mode control by adjusting downward the power output condition of the internal combustion drive system or the electric drive system, whichever has a higher residual value.

On a vehicle-speed and torque graph, the power output condition may be adjusted by changing a reference line that delimits a first area where the internal combustion drive system is a main drive source and a second area where the electric drive system is a main drive source.

On the vehicle-speed and torque graph, the second area may be an area below the reference line, and the first area may be an area above the reference line.

The second area may correspond to an area where a first drive mode in which the vehicle runs with driving power of the electric drive system is performed, and the first area may correspond to an area where a second drive mode in which driving power of the internal combustion drive system is transmitted to wheels of the hybrid vehicle is performed.

The controller may raise the reference line in a case where the residual value of the internal combustion drive system is lower than the residual value of the electric drive system.

The controller may lower the reference line in a case where the residual value of the electric drive system is lower than the residual value of the internal combustion drive system.

The controller may perform the operating point control in the residual value preservation control.

The controller may perform the operating point control by adjusting a required torque distribution ratio between the internal combustion drive system and the electric drive system.

The controller may enter the residual value preservation control on the basis of the residual value of the clutch and a residual value of the drive system converted with respect to the residual value of the clutch.

The controller may perform the clutch control in the residual value preservation control.

The controller may perform the clutch control by adjusting upward an engagement state change condition of the clutch.

The controller may enter the residual value preservation control on a condition that a residual value preservation control function is to be activated on the basis of user input.

The controller may perform at least one of the driving mode control, the operating point control, or the clutch control on the basis of a preset control level regarding a degree of execution of the residual value preservation control.

The hybrid vehicle may further include a display device that outputs information corresponding to at least one of the residual values of the internal combustion drive system, the electric drive system, and the clutch.

The display device may output information corresponding to a total residual value of the vehicle on the basis of the residual values of the internal combustion drive system, the electric drive system, and the clutch.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a diagram showing a configuration of a drive system of a hybrid vehicle that is applicable to embodiments of the present disclosure;
FIG. 2 is a diagram showing a configuration of a control system of a hybrid vehicle that is applicable to embodiments of the present disclosure;
FIG. 3 is a diagram for illustrating operations performed by a controller in a hybrid vehicle according to an embodiment of the present disclosure;
FIGs. 4A and 4B are diagrams showing information displayed through a display device in a hybrid vehicle according to an embodiment of the present disclosure;
FIG. 5 is a diagram for illustrating adjustment of power output conditions in a hybrid vehicle according to an embodiment of the present disclosure;
FIG. 6 is a flowchart for illustrating a residual value preservation control process in a hybrid vehicle according to an embodiment of the present disclosure;
FIG. 7 is a flowchart for illustrating a drive mode control process in a hybrid vehicle according to an embodiment of the present disclosure; and
FIG. 8 is a flowchart for illustrating in more detail the drive mode control process in the hybrid vehicle according to the embodiment of the present disclosure.

### DETAILED DESCRIPTION

The following specific structural and functional descriptions of embodiments of the present disclosure are merely illustrative for the purpose of describing the embodiments according to the present disclosure, and the embodiments according to the present disclosure may be implemented in various other forms.

Reference will be made in detail to various embodiments of the present disclosure, examples of which are illustrated in the accompanying drawings and described below. The present description is not intended to limit the disclosure to the exemplary embodiments, and various alternatives, modifications, equivalents and other embodiments should be interpreted as being within the spirit and scope of the disclosure.

Unless clearly defined otherwise, terms used herein, including technical or scientific terms have the same meaning as understood by those skilled in the art. Terms defined in commonly used dictionaries should be interpreted as having meanings consistent with meanings in the context of the related technology, and unless clearly defined in this specification, should not be interpreted as having ideal or excessively formal meanings.

Hereinafter, reference will be made in detail to various embodiments of the present disclosure, examples of which are illustrated in the accompanying drawings. Wherever possible, the same reference numbers will be used throughout the drawings to refer to the same or like parts.

In the description of the following embodiments, the term "preset" means that, in a case where a parameter is used in a process or algorithm, a value of the parameter is set or determined in advance. Depending on the embodiments, the value of the parameter may be set when the process or algorithm starts, or may be set during a section in which the process or algorithm is performed.

The suffixes "module" and "unit" for components used in the following description are given or used interchangeably only for ease of description of the specification, and do not have distinct meanings or roles in themselves.

In describing the embodiments, detailed descriptions of related known technologies will be omitted as necessary. It should be understood that the accompanying drawings are given hereinafter by way of illustration only and are not limitative of the disclosure, and the present disclosure is intended to cover various alternatives, modifications, equivalents and other embodiments, within the spirit and scope of the disclosure as defined by the appended claims.

It will be understood that, although the terms "first", "second", etc. may be used herein to describe various elements, these elements should not be limited by these terms. These terms are only used to distinguish one element from another.

Further, it will be understood that, when an element is "connected" or "coupled" to another element, it may be directly connected or coupled to the other element, or may be indirectly connected or coupled to the other element with a different element being interposed therebetween. In contrast, when an element is "directly connected" or "directly coupled" to another element, this means that there is no intervening element therebetween.

As used herein, the singular forms "a", "an", and "the" are intended to include the plural forms as well, unless the context clearly indicates otherwise.

It should be further understood that the terms "comprise", "include", and "have" used herein merely specify the presence of stated features, numbers, steps, operations, components, parts, or combinations thereof, but do not preclude the presence or addition of one or more other features, numbers, steps, operations, components, parts, or combinations thereof.

In addition, a "unit" or a "control unit" included in names of a motor control unit (MCU), a hybrid control unit (HCU), and the like merely refers to a controller that controls specific vehicle functions, and does not refer to a generic functional unit.

The controller may include a communication device that communicates with other controllers or sensors to control a specific function, a memory that stores an operating system, logic commands, input/output information, etc., and one or more processors that perform determinations, calculations, and decision-making necessary to control corresponding functions.

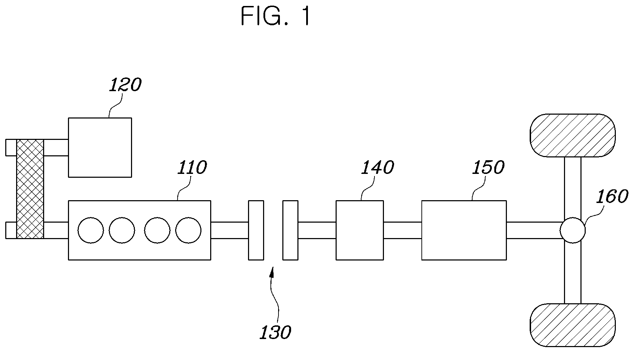

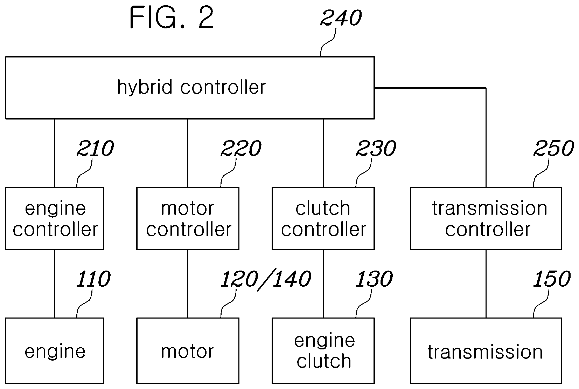

Hereinafter, before describing a residual value preservation control process in a hybrid vehicle according to embodiments of the present disclosure, the hybrid vehicle according to the embodiments of the present disclosure will first be described with reference to FIGs. 1 and 2.

FIG. 1 is a diagram showing a configuration of a drive system of a hybrid vehicle that is applicable to the embodiments of the present disclosure.

Referring to FIG. 1, a drive system of a hybrid vehicle that employs a parallel type hybrid system provided with a drive motor 140 and a clutch 130 between an internal combustion engine (ICE) 110 and a transmission 150 is shown.

The drive system of the hybrid vehicle may include an internal combustion drive system and an electric drive system. A representative example of the internal combustion drive system is the engine 110, and a representative example of the electric drive system is motors 120 and 140. Further, the internal combustion drive system and the electric drive system may respectively include other components connected for operation of the engine 110 and the motor 120, in addition to the engine 110 and the motors 120 and 140. For example, the electric drive system may include an inverter and a battery for operating the motors 120 and 140, in addition to the motors 120 and 140. The internal combustion drive system and the electric drive system may have a mutually influential relationship in which an operation of one affects an operation of the other.

The clutch 130 may selectively connect the internal combustion drive system and the electric drive system. That is, depending on the state of the clutch 130, the internal combustion drive system and the electric drive system may be connected to or disconnected from each other.

In the hybrid vehicle with such a drive system, generally, in a case where a driver depresses an accelerator after starting (that is, an accelerator pedal position sensor is on), the drive motor 140 is first operated using power from the battery in a state where the clutch 130 is opened, and power of the motor is transmitted to the transmission 150 and a final drive (FD) 160 to move wheels (EV mode). As the vehicle is gradually accelerated and a larger driving power is necessary, an auxiliary motor (or starter generator motor) 120 may operate to drive the engine 110.

Accordingly, in a case where a rotational speed difference between the engine 110 and the motor 140 falls within a certain range, the engine clutch 130 is engaged and the engine 110 and the motor 140 drive the vehicle together (switching from EV mode to HEV mode). In a case where a preset engine-off condition is satisfied, for example, due to vehicle deceleration, the engine clutch 130 is opened and the engine 110 is stopped (switching from HEV mode to EV mode). Here, the vehicle charges a battery 170 through the drive motor 140 using driving power of the wheels, which is called braking energy regeneration or regenerative braking.

Since the starter generator motor 120 serves as a starter motor when starting the engine and operates as a generator when recovering rotational energy of the engine after the engine is started or when the engine is stopped (off), the starter generator motor 120 may be called a hybrid starter generator (HSG).

In general, the transmission 150 may be a stepped transmission or a multi-plate clutch, for example, a dual clutch transmission (DCT).

FIG. 1 shows an example of a configuration of a drive system of a hybrid vehicle applicable to embodiments of the present disclosure, which is not limiting.

For example, the drive system of the hybrid vehicle applicable to the embodiments of the present disclosure may have a configuration in which one of the plurality of motors is disposed between the engine 110 and one end of the engine clutch 130, and its motor shaft is directly connected to the engine shaft of the engine 110 to constantly rotate together, and the other motor is connected between the other end of the engine clutch 130 and the transmission 150, unlike the configuration shown in FIG. 1.

Further, any configuration provided with the engine 110 and the motor 120 together to provide power necessary for the vehicle may be applied to the embodiments of the present disclosure, regardless of specific connection relationships or structures of the engine 110, the motor 120 and the components connected thereto.

FIG. 2 is a diagram showing a configuration of a control system of a hybrid vehicle that is applicable to embodiments of the present disclosure.

Referring to FIG. 2, in the hybrid vehicle that is applicable to the embodiments of the present disclosure, the engine 110 may be controlled by an engine control unit 210, and the starter generator motor 120 and the drive motor 140 may be controlled by a motor control unit (MCU) 220, and the engine clutch 130 may be controlled by a clutch control unit 230. Here, the engine control unit 210 is also called an engine management system (EMS). In addition, the transmission 150 may be controlled by a transmission control unit 250.

Each controller is connected to a hybrid control unit (HCU) 240 that is a_higher-level controller to control an entire mode switching process, to provide information necessary for engine clutch control in driving mode switching or gear shift, and/or information necessary for engine stop control to the hybrid control unit 240 under the control of the hybrid control unit 240, or to perform an operation according to control signals.

For example, the hybrid control unit 240 may determine whether to perform switching between EV mode and HEV mode or between charge-depleting (CD) mode and charge-sustaining (CS) mode depending on the vehicle's driving state. To this end, the hybrid control unit 240 may determine an opening time of the engine clutch 130, and may perform hydraulic control in a case where the engine clutch 130 is opened.

In addition, the hybrid control unit 240 may determine a state (lock-up, slip, open, etc.) of the engine clutch 130, and may control a fuel injection stop time of the engine 110.

Further, the hybrid control unit 240 may transmit a torque command for controlling torque of the starter generator motor 120 to the motor control unit 220 for engine stop control, and may perform control for recovering the engine rotational energy.

Furthermore, the hybrid control unit 240 may control a lower-level controller for determining mode switching conditions and performing mode switching in the mode switching control.

It will be apparent to those skilled in the art that the connection relationship between the above-mentioned control units and the functions of the respective control units are illustrative and are not limited by their names. For example, the hybrid control unit 240 may be replaced with corresponding functions of one or more of the other controllers. In a case where the hybrid control unit 240 may be replaced with the corresponding functions of two or more of the other controllers, the functions may be distributed to two or more of the other controllers.

The configuration of FIG. 2 described above is merely an exemplary configuration of the control system of the hybrid vehicle, and is not limiting.

The hybrid vehicle according to the embodiments of the present disclosure may suppress the operation of components with relatively low residual values among a plurality of major components such as a plurality of drive systems and a clutch provided in the vehicle through residual value preservation control, and accordingly, may prevent a residual value of a certain component among the major components from significantly becoming lower than those of the other components, thereby efficiently managing a total residual value of the vehicle.

Here, the residual value of each of the major components such as the drive systems and the clutch provided in the vehicle may refer to a current value reflecting depreciation due to use, with reference to a pre-use value such as a factory price. Also, the residual value may also be expressed as residual worth.

Such residual value may be determined through inspection of at least one predetermined evaluation item, and the evaluation item may include quality, performance, conditions, and the like. The above evaluation items may be evaluated through a total operation amount, a total operation time, etc., and characteristics of each component may be considered in the evaluation.

For example, the residual value of the internal combustion drive system may be determined by considering factors such as a fuel consumption, an overheating history, a vibration and noise generation history, and a cylinder pressure, and the residual value of the electric drive system may be determined by considering a battery's charging and discharging history, the degree of degradation of a battery, an output voltage of an inverter, a frequency and power conversion efficiency. Further, an engagement/disengagement history of the clutch may be considered when determining the residual value of the clutch.

The residual value of each component may be determined independently by the control unit provided in the hybrid vehicle, such as the hybrid control unit, the engine control unit, the motor control unit, or the clutch control unit, or may be determined through a separate device. Here, the embodiments of the present disclosure are not limited to the above-described specific method of determining the residual values, and may employ various other methods.

The total residual value of the vehicle may be determined by the residual values of the respective major components. In particular, when determining the total residual value of the vehicle, residual values of components with relatively low residual values may be decisive. For example, the total residual value of the vehicle may be determined by the residual value of the component with the lowest residual value, regardless of the residual values of other components.

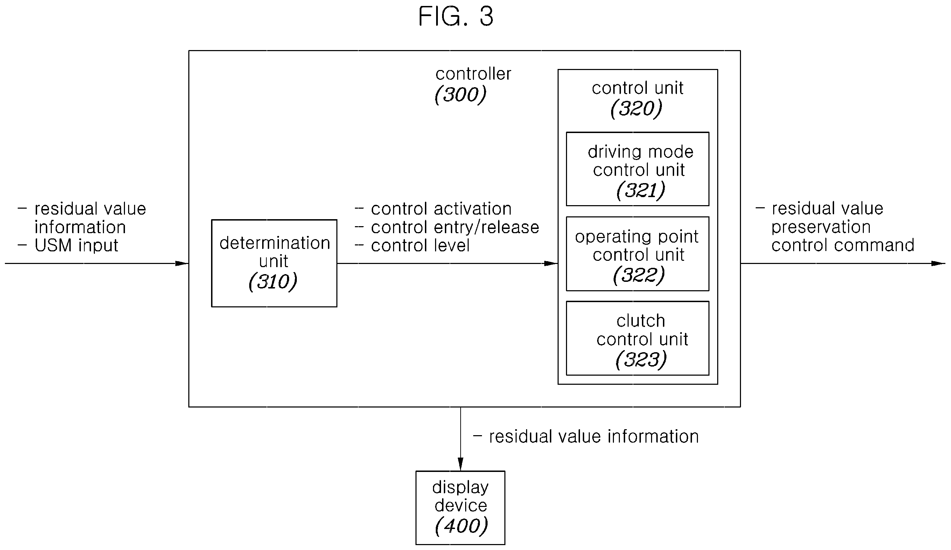

Hereinafter, residual value preservation control of a hybrid vehicle according to an embodiment of the present disclosure will be described in detail with reference to FIG. 3.

FIG. 3 is a diagram for illustrating operations performed by a controller in a hybrid vehicle according to an embodiment of the present disclosure.

Referring to FIG. 3, a controller 300 of a hybrid vehicle according to an embodiment of the present disclosure may perform residual value preservation control for balancing respective residual values of an internal combustion drive system, an electric drive system, and a clutch. During the residual value preservation control, the controller 300 may perform at least one of driving mode control, operating point control, or clutch control.

To this end, the controller 300 may obtain residual value information and user setting mode (USM) input information, and may output a residual value preservation control command, a residual value determined according to the acquired information, or the like.

In this case, the residual value information may include information for determining the residual values of the internal combustion drive system, the electric drive system, and the clutch, or information on residual values respectively predetermined for the internal combustion drive system, the electric drive system, and the clutch.

That is, according to the present embodiment, the controller 300 may obtain the information for determining the residual values of the internal combustion drive system and the electric drive system to directly determine the residual value of each of the internal combustion drive system and the electric drive system on the basis of the information, or may obtain predetermined residual values of the internal combustion drive system, the electric drive system, and the clutch from the outside.

The USM input information may include, for example, whether a residual value preservation function is to be activated, a control level, or the like, and may be input through input buttons provided on a steering wheel, center fascia, or the like.

The residual value preservation control command may include a driving mode control command, an operating point control command, a clutch control command, and the like, each of which is transmitted to the engine 110, the motors 120 and 140, and the clutch 130 to control operations of the engine 110, the motors 120 and 140, and the clutch 130.

The output residual value information may include the respective residual values of the internal combustion drive system, the electric drive system, and the clutch, and a total residual value of the vehicle determined on the basis of the respective residual values.

The process of acquiring or transmitting the above input and output information may include in-vehicle communication using a Controller Area Network (CAN), a Local Interconnect Network (LIN), or the like.

Since the controller 300 according to the present embodiment has an output value related to the control of the drive system, the controller 300 may be implemented as the hybrid control unit 240 that is a higher-level controller of the engine control unit 210 and the motor control unit 220 that controls the respective drive systems, or as a function of the hybrid control unit 240. However, such an implementation method of the controller 300 is merely an example, and is not limiting, and the controller 300 may be implemented as a separate control unit or a combination of the engine control unit 210 and the motor control unit 220, for example.

The output residual value information may be transmitted to a display device 400, and the display device 400 displays the residual value information through visual and/or auditory methods, so that a user such as a driver may recognize the residual value information of the vehicle.

In this case, the display device 400 may include a cluster or an Audio Video Navigation (AVN) device provided in the vehicle, a user terminal, or the like.

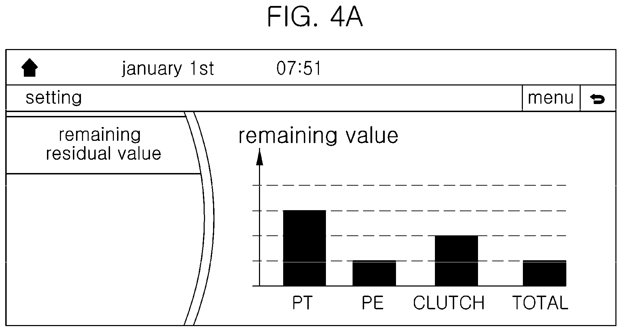

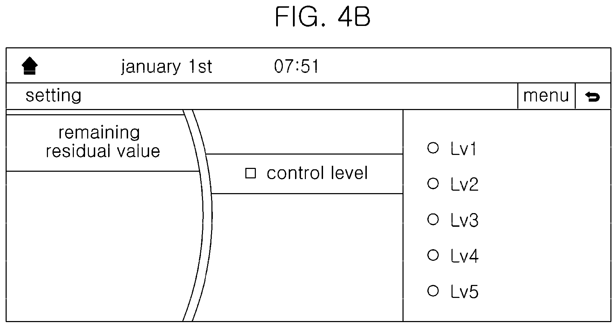

Details related to the information displayed by the display device 400 will be described with reference to FIGs. 4A and 4B.

FIGs. 4A and 4B are diagrams showing information displayed through a display device in a hybrid vehicle according to an embodiment of the present disclosure.

First, referring to FIG. 4A, residual value information is displayed on a screen of the display device 400.

In this case, on the screen of the display device 400, a residual value corresponding to each of the internal combustion drive system (PT), the electric drive system (PE), and the clutch (CLUTCH) may be displayed in the form of a graph, and a total residual value (TOTAL) of the vehicle determined on the basis of the respective residual values of the internal combustion drive system (PT), the electric drive system (PE), and the clutch (CLUTCH) may be displayed together.

In this case, the total residual value (TOTAL) of the vehicle may be determined to correspond to the lowest residual value of the residual values of the internal combustion drivetrain (PT), the electric drivetrain (PE), and the clutch (CLUTCH), as shown in FIG. 4A.

As described above, by displaying the residual value of each of the major components of the vehicle and the total residual value of the vehicle accordingly through the display device 400, it is possible for the user to recognize a current residual value of the vehicle, and to reflect the result in determining whether to activate the residual value preservation control function, and determining the control level, for example.

Referring to FIG. 4B, control level information is displayed on the screen of the display device 400.

The display device 400 may display a preset control level regarding the degree of execution of the residual value preservation control on the screen, and, for example, the control level may be classified into Lvl to Lv5.

The control level may be set on the basis of USM input information input from the user, or may be variably set on the basis of a vehicle's status or current residual value.

The user may check a currently set control level through the display device 400. In particular, since the residual value preservation control may be differentially performed depending on the set control level, it is possible to help the user determine whether to raise or lower the level of execution of the residual value preservation control from the current level. For example, in a case where the user feels dissatisfied with driving convenience or driving performance due to the execution of the residual value preservation control, the user may lower the control level to reduce the degree of execution of the residual value preservation control, and in a case where the user feels satisfied with the driving convenience or driving performance and to manage the residual value, the user may raise the degree of execution of the residual value preservation control by raising the control level.

Referring to FIG. 3, the controller 300 according to the present embodiment may include a determination unit 310 and a control unit 320. Hereinafter, the configuration and operation of the controller 300 according to the present embodiment will be described in detail.

First, the determination unit 310 may determine whether to enter the residual value preservation control for balancing on the basis of the residual values of the internal combustion drive system, the electric drive system, and the clutch. In this case, the determination unit 310 may directly determine each residual value or obtain each residual value from the outside to determine whether to enter the residual value preservation control.

In addition, the determination unit 310 may determine which of driving mode control, operating point control, and clutch control is to be performed as the residual value preservation control on the basis of the residual values of the internal combustion drive system, the electric drive system, and the clutch.

For example, in a case where a difference between the residual values of the internal combustion drive system and the electric drive system is outside a preset range, the determination unit 310 may transmit control entry information for entering the residual value preservation control and performing at least one of the driving mode control or the operating point control to the control unit 320.

Further, the determination unit 310 may determine whether to enter the residual value preservation control on the basis of the residual value of the clutch and the residual value of the drive system converted with respect to the residual value of the clutch. In this case, the determination unit 310 may transmit control entry information for performing the clutch control when entering the residual value preservation control to the control unit 320.

Here, the residual value of the drive system converted with respect to the residual value of the clutch may be, for example, an average of the residual value of the internal combustion drive system and the residual value of the electric drive system.

In addition, the determination unit 310 may determine whether to activate the residual value preservation control function on the basis of the obtained USM input information, and may reflect whether to activate the residual value preservation control function in determining whether to enter the control. For example, the determination unit 310 may determine whether to enter the residual value preservation control on the condition that the residual value preservation control function is to be activated on the basis of user's input, and accordingly, in a case where the residual value preservation control function is not activated, the residual value preservation control is not performed.

Further, the determination unit 310 may transmit a preset control level regarding the degree of execution of the residual value preservation control to the control unit 320, thereby allowing the control unit 320 to differentially perform the residual value preservation control on the basis of the control level.

In this case, the preset control level may be set according to user's input, and may be included in USM input information and transmitted to the determination unit 310.

Here, for example, as the control level becomes higher, the degree of execution of the driving mode control, the operating point control, and the clutch control in the operations of the internal combustion drive system, the electric drive system, and the clutch may be raised.

In this way, by reflecting the activation of the residual value preservation control function and the control level, it is possible to reflect an intention of a vehicle user in the control. For example, in a case where the user attaches importance to preserving the residual value of the vehicle, the user may activate the residual value preservation control function, and may set the control level to a higher level to raise the degree of execution of the residual value preservation control. Conversely, in a case where the user attaches importance to driving performance or driving convenience, the user may inactivate the residual value preservation control function, or may set the control level to a lower level to lower the degree of execution of the residual value preservation control.

The control unit 320 may perform at least one of the driving mode control, the operating point control, or the clutch control as the residual value preservation control. To this end, the control unit 320 may include a driving mode control unit 321, an operating point control unit 322, and a clutch control unit 323.

The driving mode control unit 321 may perform the driving mode control by adjusting a power output condition of at least one of the internal combustion drive system or the electric drive system.

Here, the power output condition may determine whether power output is possible through each drive system or the degree of possible output, and the operation of each drive system may be suppressed or expedited depending on the adjustment of the power output condition. For example, in a case where the operation of a specific drive system is suppressed, the frequency, period, or size of power output through the drive system may be reduced. In a case where the operation of a specific drive system is expedited, the frequency, period, or size of power output through the drive system may be increased.

In order to alleviate decrease in a residual value of a drive system with a relatively low residual value, the driving mode control unit 321 may perform driving mode control by raising the power output condition of a drive system with a lower residual value among the internal combustion drive system and the electric drive system.

In a case where the power output condition of the drive system with the relatively low residual value is raised (that is, power output becomes difficult), the proportion of vehicle driving by the power of the drive system with the low residual value may decrease.

As the proportion of vehicle driving by power of a specific drive system increases, the drive system frequently operates and its residual value decreases accordingly. Therefore, by reducing the proportion of vehicle driving by the specific drive system, it is possible to alleviate decrease in the residual value of the drive system.

Accordingly, in a case where the power output condition of the drive system with the relatively low residual value is raised, the decrease in the residual value of the drive system with the low residual value may be alleviated, and accordingly, it is possible to preserve the total residual value of the vehicle that is dependent on the residual value of the drive system with the low residual value.

Further, the driving mode control unit 321 may perform the driving mode control by adjusting downward (that is, making power output easy) the power output condition of a drive system with a relatively high residual value. In this case, the proportion of vehicle driving by power of the drive system with the relatively high residual value may increase, and accordingly, the proportion of vehicle driving by the drive system with the relatively low residual value may decrease, thereby making it possible to alleviate the decrease in the residual value of the drive system with the low residual value.

In this case, the residual value of the drive system with the relatively high residual value may be decreased, but the influence on the total residual value of the vehicle is small compared with the drive system with the relatively low residual value. Accordingly, from the viewpoint of the entire drive system, it is possible to efficiently preserve the residual value of the vehicle while providing the driving power.

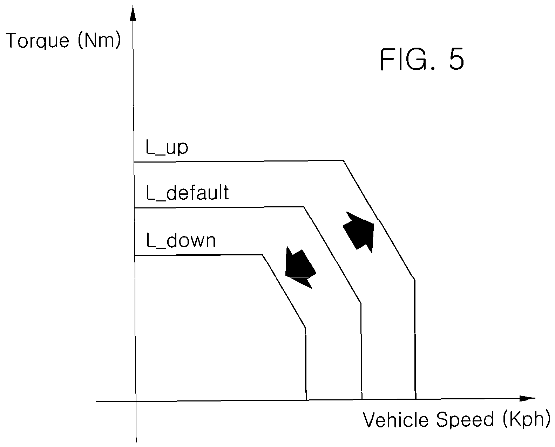

Meanwhile, the power output condition may be adjusted by changing a reference line that delimits an area (e.g., first area) where the internal combustion drive system is a main drive source and an area (e.g., second area) where the electric drive system is a main drive source on a vehicle-speed and torque graph. This will be described later with reference to FIG. 5.

The operating point control unit 322 may perform the operating point control by adjusting a required torque distribution ratio between the internal combustion drive system and the electric drive system.

For example, the operating point control unit 322 may perform the operating point control by decreasing the required torque distribution ratio of a drive system with a relatively low residual value among the internal combustion drive system and the electric drive system, and increasing the required torque distribution ratio of a drive system with a relatively high residual value, and accordingly, it is possible to reduce the output of the drive system with the relatively low residual value to preserve the residual value.

The clutch control unit 323 may perform the clutch control by raising an engagement state change condition of the clutch.

In a case where the engagement state change condition of the clutch is up-adjusted, it becomes difficult for the clutch to change from an engaged state to an opened state or from the opened state to the engaged state, thereby reducing the state change of the clutch. As the state change of the clutch occurs frequently, the residual value of the clutch may decrease more. Therefore, by adjusting upward the engagement state change condition of the clutch, it is possible to preserve the residual value of the clutch.

Hereinafter, the driving mode control according to an embodiment of the present disclosure will be described in detail with reference to FIG. 5.

FIG. 5 is a diagram for illustrating adjustment of power output conditions in a hybrid vehicle according to an embodiment of the present disclosure.

Referring to FIG. 5, the power output condition may be set on a graph where one axis represents vehicle speed and the other axis represents torque, and may be defined as a reference line that delimits an area where the electric drive system is a main drive source and an area where the internal combustion drive system is a main drive source.

More specifically, on the vehicle speed and torque graph, an area below the reference line may be the area where the electric drive system is the main drive source, and an area above the reference line may be the area where the internal combustion drive system is the main drive source.

In the area where the electric drive system is the main drive source, the vehicle may run with power output through the electric drive system, and the internal combustion drive system may not output power or may be used only as an auxiliary power output unit. Conversely, in the area where the internal combustion drive system is the main drive source, the vehicle may run with power output through the internal combustion drive system, and the electric drive system may serve as an auxiliary power source or may not be used.

The power output condition set in this way may serve as a mode transition standard between a plurality of drive modes through the electric drive system and the internal combustion drive system.

In this case, the plurality of drive modes may include a first drive mode in which the vehicle runs with the power of the electric drive system and a second drive mode in which the power of the internal combustion drive system is transmitted to wheels of the vehicle, and the drive mode may be determined as the first drive mode or the second drive mode depending on a relationship between the required torque and the vehicle speed, and the power output condition.

The first drive mode is, for example, an EV mode in which only the electric drive system outputs power for vehicle driving, and an HEV-series mode in which both the electric drive system and the internal combustion drive system output power but the power of the internal combustion drive system is not transmitted to the wheels and is used to charge the battery.

When performing the first drive mode, the power output of the internal combustion drive system is preferably blocked, but the power output of the internal combustion drive system may be partially performed due to factors other than the residual values, such as an SoC (State of Charge) of the battery.

The second drive mode may include, for example, a HEV-parallel mode in which the vehicle runs with the power of the internal combustion drive system and the electric drive system, and a mode in which only the internal combustion drive system outputs power and the electric drive system does not output power.

When performing the second drive mode, the power output of the electric drive system is preferably blocked, but the power output of the electric drive system may be partially performed due to factors other than the residual values.

On the graph shown in FIG. 5, the first drive mode may be performed in a case where the required torque and the vehicle-speed correspond to the area below the reference line, and the second drive mode may be performed in a case where the required torque and the vehicle-speed correspond to the area above the reference line. Accordingly, the reference line may serve as the mode transition standard, and the proportion of vehicle driving in the first drive mode and vehicle driving in the second drive mode may vary according to the adjustment of the reference line.

More specifically, in a case where the residual value of the internal combustion drive system is lower than the residual value of the electric drive system, the controller 300 may raise the reference line (from L_default to L_up) to preserve the residual value of the internal combustion drive system.

In this case, on the graph, the area where the internal combustion drive system is the main drive source (for example, the area where the second drive mode is performed) is reduced, and the power output condition of the internal combustion drive system is up-adjusted. Accordingly, in order to transmit the driving power to the vehicle using the internal combustion drive system as the main drive source, higher torque and vehicle-speed are necessary than before the raising.

Further, in a case where the residual value of the electric drive system is lower than the residual value of the internal combustion drive system, the controller 300 may lower the reference line (from L_default to L_down) to preserve the residual value of the electric drive system.

In this case, on the graph, the area where the electric drive system is the main drive source (for example, the area where the first drive mode is performed) is reduced, and the power output condition of the internal combustion drive system is down-adjusted. As the power output condition of the internal combustion drive system is down-adjusted, the electric drive system is used as the main drive source only at lower required torque and vehicle-speed than before the down-adjustment.

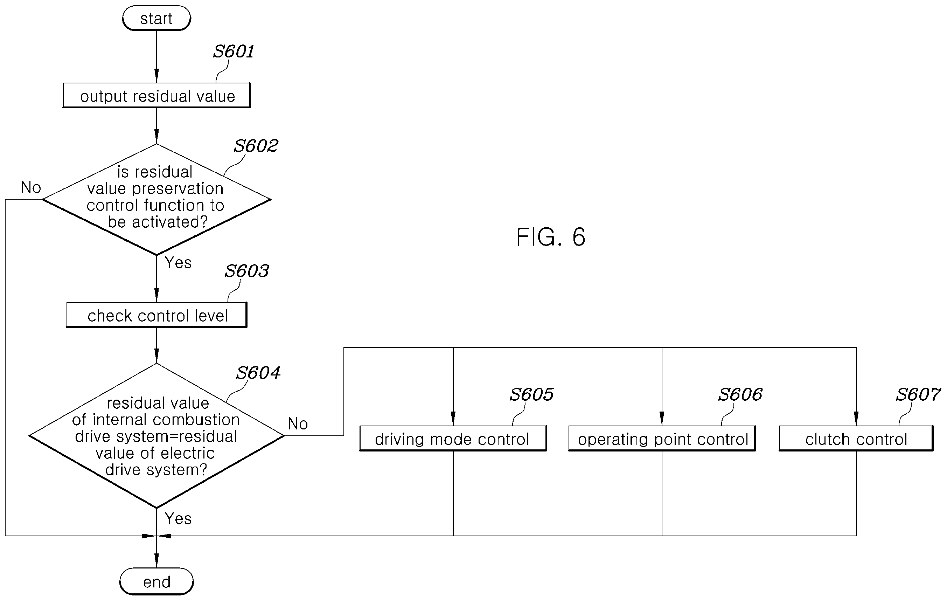

Hereinafter, the entire process of performing the residual value preservation control described so far will be described with reference to FIG. 6.

FIG. 6 is a flowchart for illustrating a residual value preservation control process in a hybrid vehicle according to an embodiment of the present disclosure.

Referring to FIG. 6, first, the display device 400 may output residual values through a screen or voice guidance (S601). In this case, the output of the residual values may be performed constantly or periodically, and may be performed according to vehicle user's input.

The vehicle user may determine whether to activate the residual value preservation function on the basis of the displayed residual values, and the determination result may be transmitted to the controller 300 as USM input information. The controller 300 determines whether the residual value preservation control function is to be activated on the basis of the input information (S602). In a case where the function is to be activated (Yes in S602), the controller 300 checks a preset control level to perform the residual value preservation control (S603).

On the other hand, in a case where the residual value preservation control function is not to be activated (No in S602), the controller 300 does not perform the residual value preservation control in reflection of an intention of the vehicle user who does not want to execute the residual value preservation control.

Then, the controller 300 may determine whether a difference between the residual values of the internal combustion drive system and the electric drive system is outside a preset range. For example, in a case where the residual values of the internal combustion drive system and the electric drive system are not the same, the controller 300 may determine that the difference is outside the preset range (S604).

In a case where the residual value difference between the internal combustion drive system and the electric drive system is outside the preset range (No in S604), the controller 300 enters the residual value preservation control to balance the residual values, and may operate at least one of the driving mode control (S605), the operating point control (S606), or the clutch control (S607).

On the other hand, in a case where the difference between the residual values of the internal combustion drive system and the electric drive system is not outside the preset range (Yes in S604), since the residual values of the internal combustion drive system and the electric drive system may be considered to be balanced, the residual value preservation control may not be performed.

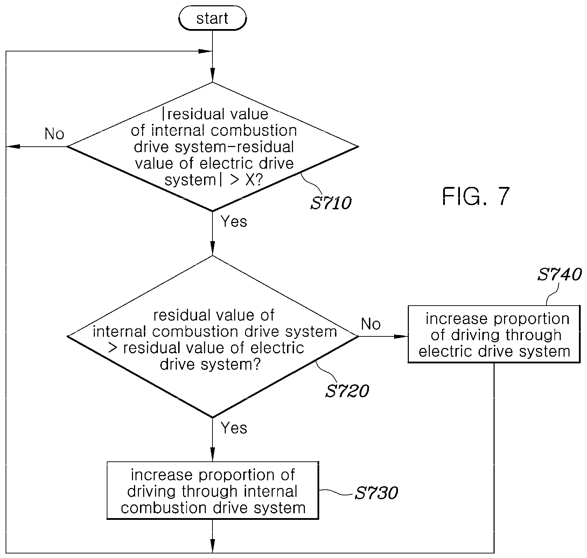

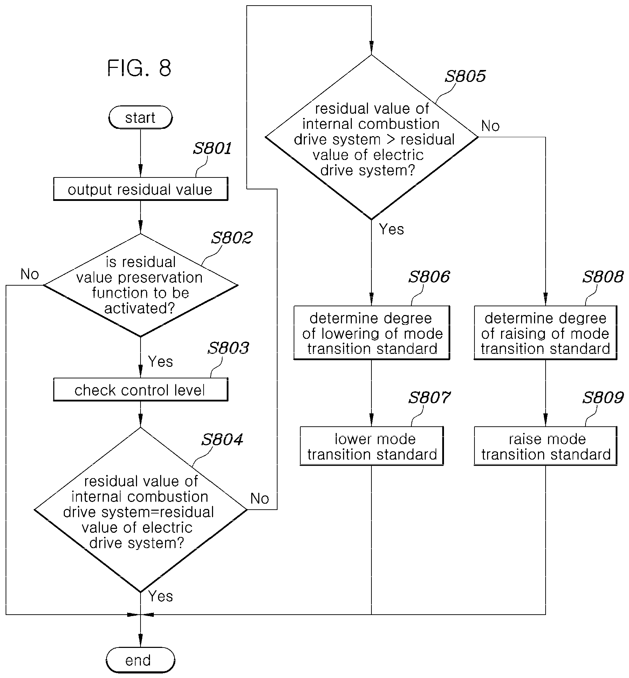

Hereinafter, the process of performing the driving mode as the residual value preservation control will be described with reference to FIGs. 7 and 8.

FIG. 7 is a flowchart for illustrating a drive mode control process in a hybrid vehicle according to an embodiment of the present disclosure.

Referring to FIG. 7, first, in a case where a difference between residual values of the internal combustion drive system and the electric drive system exceeds a preset value (X) (Yes in S710), the controller 300 determines which drive system has a lower residual value (S720). For example, the preset value (X) may be '0'.

As a result of the determination, in a case where the residual value of the electric drive system is lower (Yes in S720), the controller 300 may raise the power output condition of the electric drive system or down-adjust the power output condition of the internal combustion drive system to perform the driving mode in a way of preserving the residual value of the electric drive system, so that the proportion of driving through the internal combustion drive system may relatively increase (S730).

On the other hand, in a case where the residual value of the internal combustion drive system is lower (No in S720), the controller 300 may up-adjust the power output condition of the internal combustion drive system or down-adjust the power output condition of the electric drive system to perform the control in a way of preserving the residual value of the internal combustion drive system, so that the proportion of driving through the electric drive system may relatively increase (S740).

The drive mode control process according to the present embodiment briefly shown in FIG. 7 will be described in more detail with reference to FIG. 8.

FIG. 8 is a flowchart for illustrating in more detail the drive mode control process in the hybrid vehicle according to the embodiment of the present disclosure.

Referring to FIG. 8, first, the display device 400 may output information about at least one of residual values of the internal combustion drive system and the residual value of the electric drive system, and may output information about a residual value of the vehicle instead of or together with the above-mentioned residual values, to thereby display the result to a vehicle user (S801). In this case, the information output through the display device 400 may be performed under the control of the controller 300.

Then, the controller 300 may determine whether the residual value preservation function is to be activated on the basis of USM input information or the like (S802), and in a case where the function is to be activated (Yes in S802), the controller 300 may confirm a preset control level according to the USM input information or the like (S803).

In a case where the residual value of the internal combustion drive system and the residual value of the electric drive system are the same (Yes in S804), the controller 300 may terminate the control process, and in a case where the residual value of the internal combustion drive system and the residual value of the electric drive system are not the same (No in S804), the controller 300 may adjust the power output condition according to a relative relationship between the residual value of the internal combustion drive system and the residual value of the electric drive system.

In a case where the residual value of the electric drive system is lower than the residual value of the internal combustion drive system (Yes in S805), the controller 300 may determine the degree of lowering of the reference line described with reference to FIG. 5, that is, the mode transition standard between the first drive mode and the second drive mode according to the confirmed control level (S806).

The controller 300 lowers the mode transition standard according to the determined degree of lowering to up-adjust the power output condition of the electric drive system (S807), and accordingly, the driving mode control is performed to preserve the residual value of the electric drive system.

On the other hand, in a case where the residual value of the internal combustion drive system is lower than the residual value of the electric drive system (No in S805), the controller 300 may determine the degree of raising of the reference line described with reference to FIG. 5, that is, the mode transition standard between the first drive mode and the second drive mode according to the confirmed control level (S808).

The controller 300 raises the mode transition standard according to the determined degree of raising to up-adjust the power output condition of the internal combustion drive system (S809), and accordingly, the driving mode control is performed to preserve the residual value of the internal combustion drive system.

In FIG. 8, one cycle of the control process according to the present embodiment is shown, and all the processes (S601 to S609) shown in FIG. 8 may be performed repeatedly.

According to the above-described embodiments of the present disclosure, it is possible to balance the residual values of the main components of the vehicle, such as the internal combustion drive system, the electric drive system, and the clutch, thereby alleviating decrease in a total residual value of the vehicle due to significant decrease in the residual value of any one component compared with the other components.

Thus, it is possible to alleviate depreciation that occurs during vehicle driving, thereby improving competitiveness in used car and new car markets.

The effects that can be obtained from the present disclosure are not limited to the effects mentioned above, and other effects not mentioned will be clearly understood by those skilled in the art from the description.

Although the preferred embodiments of the present disclosure have been disclosed for illustrative purposes, those skilled in the art will appreciate that various modifications, additions and substitutions are possible, without departing from the scope and spirit of the disclosure as disclosed in the accompanying claims.

## Claims

1. A hybrid vehicle comprising:
a drive system that comprises an internal combustion drive system and an electric drive system;
a clutch that selectively connects the internal combustion drive system and the electric drive system; and
a controller that performs at least one of driving mode control, operating point control, or clutch control, in response to entering residual value preservation control for balancing respective residual values of the internal combustion drive system, the electric drive system, and the clutch.

2. The hybrid vehicle according to claim 1, wherein, in a case where a difference between the residual values of the internal combustion drive system and the electric drive system is outside a preset range, the controller enters the residual value preservation control.

3. The hybrid vehicle according to claim 2, wherein the controller performs the driving mode control by adjusting a power output condition of at least one of the internal combustion drive system or the electric drive system.

4. The hybrid vehicle according to claim 3, wherein the controller performs the driving mode control by raising the power output condition of the internal combustion drive system or the electric drive system, whichever has a lower residual value or by adjusting downward the power output condition of the internal combustion drive system or the electric drive system, whichever has a higher residual value.

5. The hybrid vehicle according to claim 3, wherein, on a vehicle-speed and torque graph, the power output condition is adjusted by changing a reference line that delimits a first area where the internal combustion drive system is a main drive source and a second area where the electric drive system is a main drive source.

6. The hybrid vehicle according to claim 5, wherein on the vehicle-speed and torque graph, the second area is an area below the reference line, and the first area is an area above the reference line.

7. The hybrid vehicle according to claim 6, wherein the second area corresponds to an area where a first drive mode in which the hybrid vehicle runs with driving power of the electric drive system is performed, and the first area corresponds to an area where a second drive mode in which driving power of the internal combustion drive system is transmitted to wheels of the hybrid vehicle is performed.

8. The hybrid vehicle according to claim 6, wherein the controller raises the reference line in a case where the residual value of the internal combustion drive system is lower than the residual value of the electric drive system or lowers the reference line in a case where the residual value of the electric drive system is lower than the residual value of the internal combustion drive system.

9. The hybrid vehicle according to claim 2, wherein the controller performs the operating point control by adjusting a required torque distribution ratio between the internal combustion drive system and the electric drive system.

10. The hybrid vehicle according to claim 1, wherein the controller enters the residual value preservation control based on the residual value of the clutch and the residual value of the drive system converted with respect to the residual value of the clutch.

11. The hybrid vehicle according to claim 10, wherein the controller performs the clutch control by adjusting upward an engagement state change condition of the clutch.

12. The hybrid vehicle according to claim 1, wherein the controller enters the residual value preservation control on a condition that a residual value preservation control function is to be activated based on user input.

13. The hybrid vehicle according to claim 1, wherein the controller performs at least one of the driving mode control, the operating point control, or the clutch control based on a preset control level regarding a degree of execution of the residual value preservation control.

14. The hybrid vehicle according to claim 1, further comprising:
a display device that outputs information corresponding to at least one of the residual values of the internal combustion drive system, the electric drive system, and the clutch.

15. The hybrid vehicle according to claim 14, wherein the display device outputs information corresponding to a total residual value of the vehicle based on the residual values of the internal combustion drive system, the electric drive system, and the clutch.
